# FASCICULE DE BREVET EUROPEEN

(11) **EP 3 533 361 B1**
(45) Date de publication et mention de la délivrance du brevet: **02.06.2021**
(21) Numéro de dépôt: 18208204.0
(22) Date de dépôt: 26.11.2018
(51) Int. Cl.: A47G 19/14, B65D 47/20, A47J 27/21

(54) **RECIPIENT MUNI D'UN COUVERCLE AVEC OBTURATEUR DE VERSAGE A COMMANDE BISTABLE**
BEHÄLTER, DER MIT EINEM DECKEL MIT SCHÜTTABDICHTUNG MIT BISTABILER STEUERSCHALTUNG AUSGESTATTET IST
CONTAINER HAVING A LID WITH POURING STOPPER WITH BISTABLE CONTROL

(30) Priorité: 02.03.2018 FR 1851845
(43) Date de publication de la demande: 04.09.2019
(73) Titulaire: SEB S.A., 69130 Ecully (FR)
(72) Inventeur: MANSEAU, Charles, 21000 Dijon (FR); DUMOUX, Philippe, 21120 Gemeaux (FR)
(74) Mandataire: SEB Développement

(56) Documents cités:
- WO-A1-98/09558
- DE-A1- 10 121 444
- DE-U1- 8 411 995
- FR-A1- 2 873 275
- JP-A- H10 295 562
- US-A- 5 779 102

## Description

### Domaine technique

La présente invention concerne le domaine des appareils de préparation de boissons tels que des machines à café ou des bouilloires, voire d'autres machines similaires, qui comportent un récipient permettant la réception d'un liquide tel que du café ou de l'eau, voire d'autres boissons.

L'invention porte tout particulièrement sur le récipient, lequel est muni d'un couvercle qui comporte un obturateur de versage à commande bistable actionné au moyen d'un bouton, l'obturateur étant placé soit dans une position ouverte permettant de verser le liquide contenu dans le récipient lors de son inclinaison, soit dans une position fermée empêchant de verser ledit liquide contenu dans le récipient lors de son inclinaison.

### Etat de la technique

Il est connu des récipients munis d'un couvercle équipé d'un obturateur de versage qui peut être commandé en actionnant un bouton.

Dans le brevet US2187927, le récipient comprend un contenant et un couvercle, le couvercle se vissant sur un contour supérieur dudit contenant. Le couvercle comporte une poignée permettant la manipulation du récipient lorsque ledit couvercle est vissé sur le contenant. Le couvercle comporte un bec verseur muni d'un orifice et un obturateur qui peut être déplacé dans une position de fermeture de l'orifice ou dans une position d'ouverture de l'orifice. L'actionnement de l'obturateur s'effectue au moyen d'un bouton agissant sur un mécanisme de transmission assujetti à l'obturateur. Une pression sur le bouton déplace l'obturateur en position ouverte et le relâchement du bouton assure son rappel et le retour de l'obturateur en position fermée.

Cette mise en œuvre du récipient selon US2187927 présente plusieurs inconvénients. Le couvercle est encombrant du fait qu'il intègre le bec verseur et surtout la poignée permettant la manipulation du récipient. L'utilisateur peut éprouver des difficultés à maintenir convenablement le contenant durant le dévissage du couvercle puisqu'il doit saisir le contour (de dimension importante) du contenant d'une main et dévisser le couvercle de l'autre main. Une fois le couvercle dévissé, celui-ci ne peut pas être posé facilement sur un support du fait de l'encombrement de la poignée. En outre, l'utilisateur doit maintenir la poignée et appuyer sur le bouton pour ouvrir l'obturateur, tout en inclinant le récipient durant le versage du liquide ; la manipulation du récipient est donc peu pratique, celle-ci pouvant occasionner une gêne au niveau du pouce et/ou du poignet de l'utilisateur.

Le récipient décrit dans le titre JPH10295562 pallie les inconvénients du récipient décrit dans le titre US2187927. Selon le titre JPH10295562, le récipient comprend un contenant muni d'une poignée fixe et d'un bec verseur disposé sur son contour supérieur. Le récipient comprend un couvercle assemblé de manière amovible sur le contenant. Le couvercle comporte un conduit de versage qui s'étend entre l'intérieur du contenant et le bec verseur, le conduit de versage comportant un obturateur de versage mobile entre une position ouverte et une position fermée. Le couvercle comprend sur son côté supérieur un bouton qui agit sur un dispositif de commande bistable permettant de changer la position - ouverte ou fermée - de l'obturateur de versage lors d'une impulsion sur le bouton.

La manipulation du récipient reste peu pratique selon cette configuration décrite dans le titre JPH10295562. En effet, l'utilisateur doit nécessairement manipuler le récipient en employant ses deux mains durant le versage du liquide, l'une des mains pour saisir la poignée et l'autre pour appuyer sur le bouton afin de déplacer l'obturateur de versage en position ouverte puis en position fermée. Cela empêche, par exemple, de tenir un objet ou un produit (un verre, une tasse, un plateau, une soucoupe ...) dans une main et de servir la boisson contenue dans le récipient en manipulant ledit récipient avec l'autre main, à moins d'appuyer d'abord sur le bouton avec une main pour déplacer l'obturateur en position ouverte puis de saisir la poignée avec la même main pour verser le liquide et, enfin, d'appuyer à nouveau sur le bouton pour déplacer l'obturateur en position fermée, ce qui complique fortement la manipulation du récipient.

On connait également du document DE8411995 un récipient muni d'un couvercle équipé d'un obturateur de versage qui peut être commandé en actionnant un bouton.

### Résumé de l'invention

La présente invention pallie les inconvénients précités des conceptions de récipient décrites dans les titres US2187927 et JPH10295562.

A cet effet, l'invention concerne un récipient, décrit dans la revendication 1, qui s'étend selon une direction définie par un axe vertical. Le récipient comprend un contenant, un couvercle amovible, une poignée fixe sur le contenant et un bec verseur. Le couvercle comporte un conduit de versage entre l'intérieur du contenant et le bec verseur, le conduit de versage comportant un obturateur de versage mobile entre une position ouverte et une position fermée. Le changement de position de l'obturateur de versage est commandé par un bouton agissant sur un dispositif de commande bistable. De préférence, le bec verseur est agencé sur un contour supérieur du contenant, mais on peut prévoir une variante avec un agencement du bec verseur sur le couvercle.

Le bouton est agencé sur la poignée fixe ou, dans une alternative en dehors de la présente invention, sur le couvercle, à proximité de la poignée fixe, de telle sorte que la main qui saisit la poignée pour manipuler le récipient puisse également appuyer sur le bouton, le bouton étant mobile entre une position sortie de repos et une position enfoncée dans laquelle le dispositif de commande bistable fait changer la position de l'obturateur de versage qui passe en position ouverte ou en position fermée, selon son état précédent.

Le positionnement du bouton sur la poignée fixe ou sur le couvercle, à proximité de la poignée fixe, présente donc pour avantage de pouvoir saisir le récipient d'une main et d'appuyer sur le bouton avec le pouce de la même main. La présence du dispositif de commande bistables évite de devoir appuyer en permanence sur le bouton avec le pouce durant le versage du liquide contenu dans le récipient.

Le dispositif de commande bistable est agencé dans le couvercle. Ainsi, le dispositif de commande bistable maintient l'obturateur de versage dans la position ouverte ou la position fermée et le couvercle peut être retiré du contenant quelle que soit la position de l'obturateur de versage.

On entend par couvercle amovible le fait que le couvercle peut être déplacé pour accéder à l'intérieur du contenant, par exemple pour son remplissage en liquide ou pour nettoyer l'intérieur du contenant. Ainsi, selon les diverses variantes envisageables du récipient entrant sous le couvert de l'invention, le couvercle peut être complétement dégagé du contenant ou simplement articulé sur le contenant.

Selon un mode de réalisation du récipient, le dispositif de commande bistable est de type stylo à bille, bien connu de l'homme du métier. On peut toutefois envisager la mise en œuvre d'autres conceptions de dispositifs de commande bistable, sans sortir du cadre de l'invention.

Le bouton comporte un poussoir qui pénètre dans un passage du couvercle lorsque le bouton est dans la position enfoncée et qui se retire hors du couvercle lorsque le bouton est dans la position sortie de repos.

On comprend que le poussoir agit sur le dispositif de commande bistable pour faire changer de position l'obturateur de versage lorsque le bouton est dans la position enfoncée et que le poussoir est hors du couvercle lorsque le bouton est dans la position sortie de repos. Ainsi, le couvercle peut être retiré du contenant quelle que soit la position de l'obturateur de versage.

De préférence, le dispositif de commande bistable comporte une pièce de guidage sur laquelle agit le poussoir pour actionner ledit dispositif de commande bistable et faire changer de position l'obturateur de versage.

Selon un mode de réalisation du récipient, le bouton est mobile en translation selon une direction définie dans un plan perpendiculaire à l'axe vertical. De préférence, la translation du bouton s'effectue radialement à l'axe vertical, pour une meilleure ergonomie du récipient. On pourrait toutefois envisager de translater le bouton selon une direction située dans ledit plan, mais de manière non sécante à l'axe vertical. On pourrait aussi envisager de translater le bouton selon une direction située dans un plan incliné vis-à-vis de l'axe vertical, ladite direction étant sécante ou non audit axe vertical.

Selon un mode de réalisation du récipient, l'obturateur de versage est décalé à proximité du bec verseur. Le décalage de l'obturateur à proximité du bec verseur facilite le versage du liquide disposé dans le contenant sans devoir incliner trop le récipient.

Selon un mode de réalisation du récipient, l'obturateur de versage est mobile en translation verticale selon un axe parallèle à l'axe vertical. En outre, des moyens de transmission sont agencés entre le dispositif de commande bistable et l'obturateur de versage pour translater verticalement ledit obturateur de versage en position ouverte ou en position fermée lors de l'activation du dispositif de commande bistable au moyen du bouton.

Selon un mode de réalisation du récipient, le couvercle comporte un conduit de mise à l'air entre l'intérieur et l'extérieur du contenant. Le conduit de mise à l'air comporte un obturateur de mise à l'air mobile entre une position ouverte et une position fermée, le changement de position de l'obturateur de mise à l'air étant commandé par le bouton agissant sur le dispositif de commande bistable. La mise à l'air du récipient facilite l'écoulement du liquide par le conduit de versage, durant le versage.

On comprend que le conduit de mise à l'air et le conduit de versage sont deux conduits séparés et distincts.

De préférence, selon ce mode de réalisation précité du récipient, la poignée fixe est agencée de manière diamétralement opposée au bec verseur, l'obturateur de mise à l'air étant décalé à proximité de la poignée. Cela permet d'éviter le passage du liquide par le conduit de mise à l'air durant le versage où le récipient est incliné.

De préférence, selon le mode de réalisation précité du récipient, l'obturateur de mise à l'air est mobile en translation selon une direction définie dans un plan perpendiculaire à l'axe vertical, de préférence radialement à l'axe vertical. On pourrait toutefois prévoir une translation de l'obturateur de mise à l'air selon des directions différentes que celle indiquée ci-avant.

Selon un mode de réalisation du récipient, le couvercle comporte un indicateur de la position de l'obturateur de versage. De préférence, le couvercle comporte une fenêtre derrière laquelle est agencé l'indicateur. De préférence, l'indicateur est visible sur une paroi supérieure du couvercle. Cet indicateur permet de connaître l'état de l'obturateur de versage notamment lorsque l'utilisateur saisit la poignée, l'utilisateur sachant alors s'il y doit appuyer ou non sur le bouton pour inverser la position de l'obturateur de versage.

Selon un mode de réalisation du récipient, le contenant comprend une ouverture supérieure qui reçoit le couvercle au moyen d'un système à baïonnette. Un tel système à baïonnette assure un repositionnement précis du couvercle sur le contenant, ce qui garantit une activation convenable du dispositif de commande bistable par le bouton lorsque ce dernier est actionné par l'utilisateur. Bien entendu, on peut envisager d'autres systèmes d'ouverture et de fermeture entre le couvercle et le contenant qui assurent également un repositionnement précis. On peut aussi envisager de monter le couvercle à pivotement sur le contenant selon un axe de pivotement qui, par exemple, est perpendiculaire à un axe disposé radialement à l'axe vertical. Lorsqu'une telle articulation sera prévue entre le couvercle et le contenant, un système d'encliquetage permettra le maintien du couvercle en position de fermeture de l'ouverture supérieure sur le contenant.

Selon un mode de réalisation du récipient, le bouton est monté en rappel par ressort dans sa position sortie de repos. Le retour du bouton en position sortie de repos permet de pouvoir déplacer ou dégager le couvercle vis-à-vis du contenant, quelle que soit la position - ouverte ou fermée - de l'obturateur de versage.

Selon une réalisation du récipient, celui-ci est une verseuse destinée à coopérer avec une machine à café, le couvercle comportant un clapet mobile entre une position fermée lorsque la verseuse est retirée de la machine à café et une position ouverte de transfert du café lorsque la verseuse est placée dans la machine à café. De préférence, le clapet est agencé au centre du couvercle, le clapet étant mobile en translation selon un axe parallèle à l'axe vertical.

Selon une autre réalisation du récipient, celui-ci est une bouilloire, le couvercle comportant un clapet de surpression mobile entre une position fermée lorsque la pression dans le récipient est inférieure à un seuil prédéterminé et une position ouverte lorsque la pression dans le récipient est supérieure au seuil prédéterminé.

### Brève description des figures

La description suivante d'un mode de réalisation non limitatif du récipient met en évidence les caractéristiques et avantages de la présente invention. Cette description s'appuie sur des figures, parmi lesquelles :

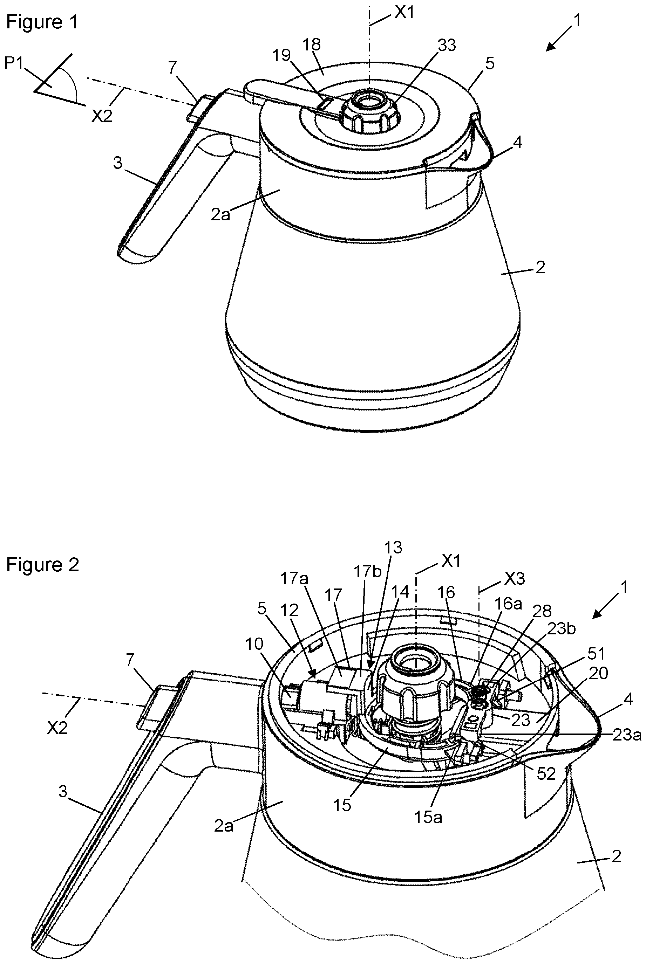

- La figure 1 illustre un récipient de type verseuse d'une machine à café ;

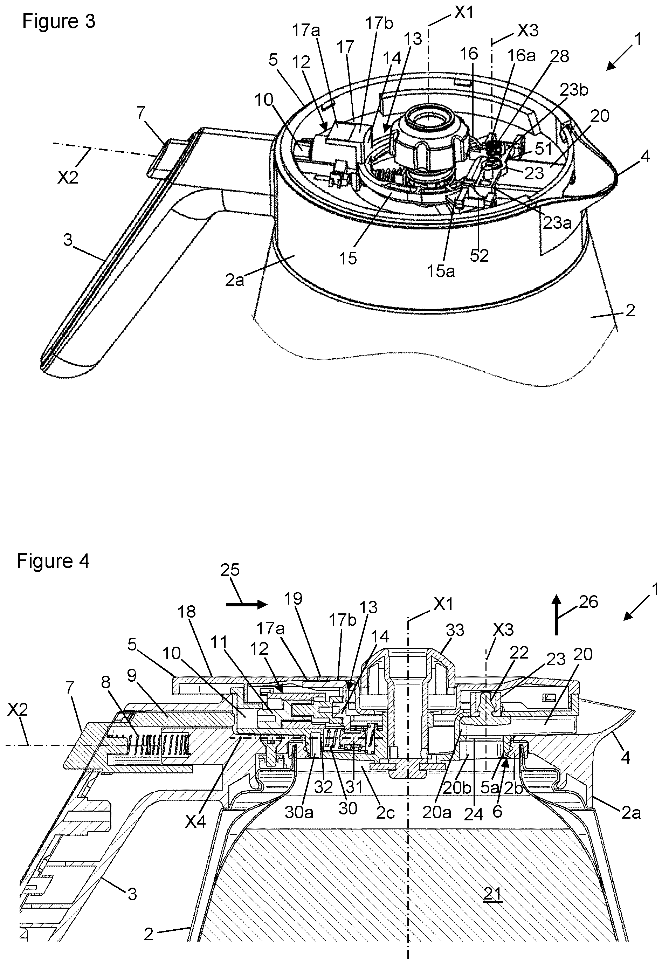

- Les figures 2 et 3 illustrent le récipient de la figure 1 avec une partie du couvercle effacée de sorte à mettre en évidence le dispositif de commande bistable et le système de transmission entre ledit dispositif et l'obturateur de versage, dans les deux positions ouverte et fermée de l'obturateur de versage ;

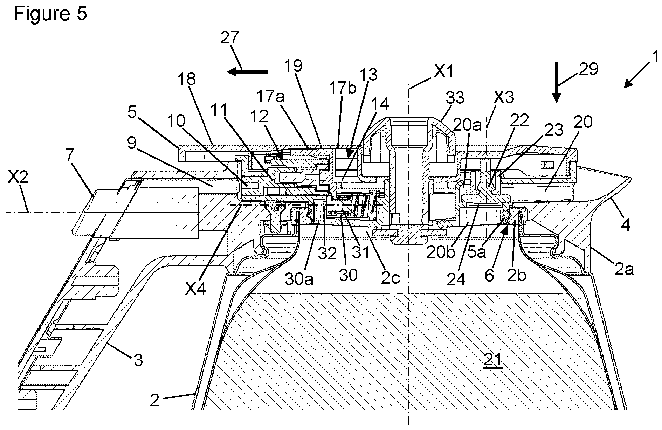

- Les figures 4 et 5 illustrent en coupe le récipient avec l'obturateur de versage dans les deux positions ouverte et fermée et l'obturateur de mise à l'air également dans les deux positions ouverte et fermée, lesdites figures mettant en évidence le bouton, le dispositif de commande bistable, l'obturateur de versage et l'obturateur de mise à l'air.

### Description détaillée

Comme l'illustrent les figures 1 à 5, le récipient 1 comprend un contenant 2 qui présente plus ou moins une forme de révolution autour d'un axe vertical X1, le récipient 1 s'étendant dans une direction définie selon cet axe vertical X1. Le récipient comprend une poignée 3 qui est fixée sur le contour supérieur 2a du contenant 2. De même, le récipient comprend un bec verseur 4 qui est agencé sur le contour supérieur 2a du contenant 2, de manière diamétralement opposée à la poignée 3, comme l'illustrent ces figures 1 à 5.

Tel que l'illustrent les figures 1 à 5, le récipient 1 comprend un couvercle 5 qui se fixe sur le contour supérieur 2a du contenant 2 grâce à un système à baïonnette 6 mis en place entre une paroi interne 2b du contour supérieur 2a et une paroi externe 5a du couvercle 5. Un tel système à baïonnette 6 est bien connu, raison pour laquelle il ne sera pas détaillé dans la présente demande de brevet. La mise en place du système à baïonnette 6 permet d'assurer une étanchéité entre ladite paroi interne 2b et ladite paroi externe 5a. Cette paroi interne 2b définie une ouverture supérieure 2c sur le contour supérieur 2a, par laquelle pénètre le liquide dans le contenant 2.

Tel qu'illustré sur les figures 1 à 5, la poignée 3 est munie d'un bouton 7 qui est monté en translation selon un axe X2 disposé radialement à l'axe vertical X1. On pourrait toutefois envisager que cet axe X2 translate selon une direction différente, par exemple selon une direction définie dans un plan P1 perpendiculaire à l'axe vertical X1, mais de manière non sécante audit axe vertical X1. Le bouton 7 est monté en rappel par ressort 8 dans la position repos illustrée sur ces figures 1 à 5. Le bouton 7 comporte un poussoir 9 ; lorsque le bouton 7 est enfoncé, le poussoir 9 pénètre dans un passage 10 sur le couvercle 5 et vient actionner une pièce de guidage 11 d'un dispositif de commande bistable 12 qui change alors de position. Lorsque le bouton 7 est relâché, le poussoir 9 se rétracte instantanément dans la poignée 3 sous l'effet du ressort 8 et il est complètement dégagé du couvercle 5, ce qui permet de retirer le couvercle 5 du contenant 2 quelle que soit la position du dispositif de commande bistable 12.

L'activation du bouton 7 permet donc le changement d'état du dispositif de commande bistable 12 qui passe soit dans une première position illustrée en figures 2 et 4 soit dans une seconde position illustrée en figures 3 et 5. Ce dispositif de commande bistable 12 est du type stylo à bille, bien connu de l'homme du métier, un exemple de réalisation étant décrit dans le brevet US3137276A. Ce dispositif de commande bistable 12 est assujetti à une pièce de transmission 13 qui, de ce fait, se déplace avec ledit dispositif de commande bistable 12 soit dans la première position illustrée en figures 2 et 4 soit dans la seconde position illustrée en figures 3 et 5, lors d'une activation du bouton 7.

La pièce de transmission 13 se déplace en translation selon une direction parallèle à l'axe X2. Comme l'illustrent les figures 2 à 5, la pièce de transmission 13 comprend une patte en équerre 14 et deux branches incurvées 15, 16. La patte en équerre 14 comporte une face supérieure 17 disposant de deux parties 17a, 17b qui présentent l'une vis-à-vis de l'autre un aspect visuel différent, par exemple une différence de couleur. Le couvercle 5 comporte une paroi supérieure 18 qui comporte une fenêtre 19 sous laquelle est positionnée la face supérieure 17. Lorsque le dispositif de commande bistable 12 est placé dans la première position illustrée en figures 2 et 4, la première partie 17a de la face supérieure 17 vient se positionner sous la fenêtre 19 ; lorsque le dispositif de commande bistable 12 est placé dans la seconde position illustrée en figures 3 et 5, la seconde partie 17b de la face supérieure 17 vient se positionner sous la fenêtre 19. Ainsi, l'utilisateur peut visualiser un changement d'état du récipient 1 lors de l'activation du bouton 7, lui indiquant s'il peut ou non verser le liquide contenu dans ledit récipient selon son état (positions ouvertes ou fermées qui seront détaillées ci-après).

Tel que l'illustrent les figures 2 à 4, le couvercle 5 comprend un conduit de versage 20 qui présente par exemple une forme coudée et qui permet à une chambre 21 du contenant 2 de communiquer avec le bec verseur 4 lorsque ledit couvercle 5 ferme ledit contenant 2. Un obturateur de versage 22 est logé dans la partie coudée 20a du conduit de versage 20 et est monté sur une pièce de support 23 qui est agencée transversalement par rapport à la direction de translation de la pièce de transmission 13. Cette pièce de support 23 est montée en liaison glissière à l'intérieur du couvercle 7, ladite liaison glissière permettant à l'obturateur de versage 22 de translater verticalement selon un axe X3 parallèle à l'axe vertical X1. Deux jeux de cames 51, 52 (non illustré en détail sur les figures 2 et 3) sont mis en œuvre entre les extrémités 15a, 16a des deux bras incurvés 15, 16 de la pièce de transmission 13 et les deux parties d'extrémité 23a, 23b de la pièce de support 23. Le conduit de versage 20 comprend un orifice 24 par lequel peut s'écouler le liquide.

Lorsque le dispositif de commande bistable 12 est actionné par le bouton 7 et se déplace jusque dans la première position illustrée en figure 2 et 4, la pièce de transmission 13 translate dans le sens de la flèche 25, ce qui permet aux jeux de cames 51, 52 de translater la pièce de support 23 dans le sens de la flèche 26 et de placer l'obturateur de versage 22 dans une position ouverte illustrée sur la figure 4, selon laquelle ledit obturateur de versage 22 est dégagé de l'orifice 24. Dans cette position ouverte de l'obturateur de versage 22, une inclinaison vers le bas du bec verseur 4 permet au liquide contenu dans la chambre 21 de couler dans le conduit de versage 20, jusque dans le bec verseur 4.

Inversement, lorsque le dispositif de commande bistable 12 est actionné par le bouton 7 et se déplace jusque dans la deuxième position illustrée en figure 3 et 5, la pièce de transmission 13 translate dans le sens de la flèche 27, ce qui permet aux jeux de cames 51, 52 et à un ressort de rappel 28 (illustré figures 2 et 3) de translater la pièce de support 23 dans le sens de la flèche 29 et de placer l'obturateur de versage 22 dans une position fermée illustrée sur la figure 5, selon laquelle ledit obturateur de versage 22 obture l'orifice 24. Dans cette position fermée de l'obturateur de versage 22, le liquide contenu dans la chambre 21 ne peut couler dans le conduit de versage 20 ni sortir par le bec verseur 4. Tel qu'illustré sur les figures 4 et 5, l'entrée 20b du conduit de versage 20 et l'obturateur de versage 22 sont positionnés à proximité du bec verseur 4, ce qui facilite l'écoulement du liquide contenu dans la chambre 21 sans nécessité une forte inclinaison du récipient 1.

Tel que l'illustrent les figures 4 et 5, le couvercle 5 comprend un conduit de mise à l'air 30 qui permet à l'air ambiant de transiter entre la chambre 21 du contenant 2 et l'extérieur du récipient 1. Un obturateur de mise à l'air 31 est logé dans le conduit de mise à l'air 30 et est monté sur la patte en équerre 14 de la pièce de transmission 13. Ainsi l'obturateur de mise à l'air 31 translate avec la pièce de transmission 13 selon une direction définie par un axe X4 parallèle à l'axe X2. Le conduit de mise à l'air 30 comprend un orifice 32 par lequel circule l'air.

Lorsque le dispositif de commande bistable 12 est actionné par le bouton 7 et se déplace jusque dans la première position illustrée en figure 2 et 4, la pièce de transmission 13 translate dans le sens de la flèche 25, ce qui permet de placer l'obturateur de mise à l'air 31 dans une position ouverte illustrée sur la figure 4, selon laquelle ledit obturateur de mise à l'air 31 est dégagé de l'orifice 32.

Dans cette position ouverte de l'obturateur de mise à l'air 31, la chambre 21 est à la pression ambiante, ce qui permet au liquide contenu dans la chambre 21 de couler normalement dans le conduit de versage 20 jusque dans le bec verseur 4 - du fait que l'obturateur de versage 22 est également en position ouverte - lors d'une inclinaison vers le bas du bec verseur 4.

Inversement, lorsque le dispositif de commande bistable 12 est actionné par le bouton 7 et se déplace jusque dans la deuxième position illustrée en figure 3 et 5, la pièce de transmission 13 translate dans le sens de la flèche 27, ce qui permet de placer l'obturateur de mise à l'air 31 dans une position fermée illustrée sur la figure 5, selon laquelle ledit obturateur de mise à l'air 31 obture l'orifice 32.

Dans cette position fermée de l'obturateur de mise à l'air 31, l'obturateur de versage 22 est également en position fermée, ce qui assure une fermeture complètement étanche du contenant 2 par le couvercle 5 étant donné que le couvercle 5 est également assemblé de manière étanche avec le contenant 2. Ainsi, le renversement ou l'inclinaison du récipient 1 dans des conditions involontaires empêche tout risque d'écoulement du liquide hors dudit récipient 1. Tel qu'illustré sur les figures 4 et 5, l'entrée 30a du conduit de mise à l'air 30 et l'obturateur de mise à l'air 31 sont positionnés à proximité de la poignée 3, ce qui empêche le liquide de s'écouler par le conduit de mise à l'air 30 durant son écoulement par le conduit de versage 20, lors d'une forte inclinaison vers le bas du bec verseur 4.

Le récipient 1 illustré au travers des figures 1 à 5 est du type verseuse, destinée à coopérer avec une machine à café (non illustrée). Pour cela, le couvercle 5 comporte un clapet 33 qui est positionné dans une position fermée illustrée sur les figures 4 et 5 lorsque le récipient 1 est retiré de la machine à café. Le clapet 33 est positionné au centre du couvercle 5 et selon l'axe de révolution du contenant 2 défini par l'axe vertical X1, lors de l'assemblage du couvercle 5 avec le contenant 2. Le clapet 33 translate vers le bas selon l'axe vertical X1 lors du repositionnement du récipient 1 sur un socle (non illustré) de la machine à café, ce qui permet son déplacement dans une position ouverte de transfert du café. Bien entendu, on pourrait envisager une autre position du clapet 33, celui-ci translatant dans ce cas selon un axe parallèle à l'axe vertical X1. Un tel clapet 33 est bien connu sur les verseuses traditionnelles.

La description précédente du récipient 1, à l'appui des figures 1 à 5, n'est qu'un mode de réalisation particulier, de nombreuses variantes pouvant être envisagées sans sortir du cadre de l'invention. On pourra notamment prévoir des moyens de transmission différents entre le dispositif de commande bistable 12 et l'obturateur de versage 22 et entre ledit dispositif de commande bistable 12 et l'obturateur de mise à l'air 31. On pourra aussi prévoir des agencements différents du conduit de versage 20 et du conduit de mise à l'air 30, nécessitant de translater l'obturateur de versage 22 et l'obturateur de mise à l'air 31 selon des axes X2 et X4 orientés différemment que sur les figures 2 à 5.

Les caractéristiques du récipient 1, objets de l'invention, peuvent être mises en œuvre sur un récipient de type bouilloire. Du fait de l'étanchéité mise en œuvre entre le couvercle 5 et le contenant 2 lorsque l'obturateur de versage 22 et l'obturateur de mise à l'air 31 sont en positions fermées, le couvercle comportera un clapet de surpression (non illustré) mobile entre une position fermée lorsque la pression dans le récipient est inférieure à un seuil prédéterminé et une position ouverte lorsque la pression dans le récipient est supérieure au seuil prédéterminé. Un tel clapet de surpression est connu de l'homme du métier. Le couvercle 5 pourra être complètement amovible du contenant 2, de manière similaire à la description précédente, voire pourra être articulé en pivotement sur le contour supérieur 2a du contenant 2, selon un axe défini transversalement par rapport à la poignée 3, et maintenu en position fermée et étanche grâce à un système d'encliquetage agencé entre le couvercle 5 et le contour supérieur 2a du contenant 2. Une telle articulation entre le couvercle 5 et le contenant 2 est bien connue sur les bouilloires traditionnelles.

## Revendications

1. Récipient (1) s'étendant selon une direction définie par un axe vertical (X1) et comprenant un contenant (2), un couvercle (5) amovible, une poignée (3) fixe sur le contenant et un bec verseur (4), le couvercle comportant un conduit de versage (20) entre l'intérieur du contenant et le bec verseur, le conduit de versage comportant un obturateur de versage (22) mobile entre une position ouverte et une position fermée, le changement de position de l'obturateur de versage étant commandé par un bouton (7) agissant sur un dispositif de commande bistable (12), le bouton (7) est agencé sur la poignée (3) fixe, de telle sorte que la main qui saisit la poignée (3) pour manipuler le récipient puisse également appuyer sur le bouton (7), le bouton (7) étant mobile entre une position sortie de repos et une position enfoncée dans laquelle le dispositif de commande bistable (12) fait changer la position de l'obturateur de versage (22), **caractérisé en ce que** le dispositif de commande bistable (12) est agencé dans le couvercle (5) et **en ce que** le bouton (7) comporte un poussoir (9) qui pénètre dans un passage (10) du couvercle (5) lorsque le bouton (7) est dans la position enfoncée et qui se retire hors du couvercle (5) lorsque le bouton (7) est dans la position sortie de repos, le couvercle pouvant être retiré du contenant quelle que soit la position de l'obturateur de versage

2. Récipient (1) selon la revendication 1, dans lequel le dispositif de commande bistable (12) est de type stylo à bille.

3. Récipient (1) selon l'une quelconque des revendications 1 ou 2, dans lequel le dispositif de commande bistable (12) comporte une pièce de guidage (11) sur laquelle agit le poussoir (9) pour actionner ledit dispositif de commande bistable (12) et faire changer de position l'obturateur de versage (22).

4. Récipient (1) selon l'une quelconque des revendications 1 ou 3, dans lequel le bouton (7) est mobile en translation selon une direction définie dans un plan (P1) perpendiculaire à l'axe vertical (X1), de préférence radialement à l'axe vertical (X1).

5. Récipient (1) selon l'une quelconque des revendications 1 à 4, dans lequel l'obturateur de versage (22) est décalé à proximité du bec verseur.

6. Récipient (1) selon l'une quelconque des revendications 1 à 5, dans lequel le couvercle (5) comporte un conduit de mise à l'air (30) entre l'intérieur et l'extérieur du contenant (2), le conduit de mise à l'air étant séparé et distinct du conduit de versage (20) et comportant un obturateur de mise à l'air (31) mobile entre une position ouverte et une position fermée, le changement de position de l'obturateur de mise à l'air étant commandé par le bouton (7) agissant sur le dispositif de commande bistable (12).

7. Récipient (1) selon la revendication 6, dans lequel la poignée (3) est agencée de manière diamétralement opposée au bec verseur (4), l'obturateur de mise à l'air (31) étant décalé à proximité de la poignée.

8. Récipient (1) selon l'une quelconque des revendications 6 ou 7, dans lequel l'obturateur de mise à l'air (31) est mobile en translation selon une direction (X4) définie dans un plan perpendiculaire à l'axe vertical (X1), de préférence radialement à l'axe vertical (X1).

9. Récipient (1) selon l'une quelconque des revendications 1 à 8, dans lequel le couvercle (5) comporte un indicateur (17a, 17b) de la position de l'obturateur de versage (22).

10. Récipient (1) selon la revendication 9, dans lequel le couvercle (5) comporte une fenêtre (19) derrière laquelle est agencé l'indicateur (17a, 17b).

11. Récipient (1) selon l'une quelconque des revendications 9 ou 10, dans lequel l'indicateur (17a, 17b) est visible sur une paroi supérieure (18) du couvercle (5).

12. Récipient (1) selon l'une quelconque des revendications 1 à 11, dans lequel le contenant (2) comprend une ouverture supérieure (2c) qui reçoit le couvercle (5) au moyen d'un système à baïonnette (6).

13. Récipient (1) selon l'une quelconque des revendications 1 à 12, dans lequel le bouton (7) est monté en rappel par ressort (8) dans sa position sortie de repos.

14. Récipient (1) selon l'une quelconque des revendications 1 à 13, lequel est une verseuse destinée à coopérer avec une machine à café, le couvercle (5) comportant un clapet (33) mobile entre une position fermée lorsque la verseuse est retirée de la machine à café et une position ouverte de transfert du café lorsque la verseuse est placée dans la machine à café.

15. Récipient (1) selon la revendication 14, dans lequel le clapet (33) est agencé au centre du couvercle (5), le clapet étant mobile en translation selon un axe parallèle à l'axe vertical (X1).

16. Récipient (1) selon l'une quelconque des revendications 1 à 14, lequel est une bouilloire, le couvercle (5) comportant un clapet de surpression mobile entre une position fermée lorsque la pression dans le récipient est inférieure à un seuil prédéterminé et une position ouverte lorsque la pression dans le récipient est supérieure au seuil prédéterminé.

## Patentansprüche

1. Behälter (1), der sich entlang einer von einer vertikalen Achse (X1) definierten Richtung erstreckt und ein Behältnis (2), einen abnehmbaren Deckel (5), einen festen Griff (3) am Behältnis und eine Tülle (4) umfasst, wobei der Deckel eine Gießröhre (20) zwischen dem Inneren des Behältnisses und der Tülle umfasst, wobei die Gießröhre eine zwischen einer offenen Position und einer geschlossenen Position bewegliche Gießabdichtung (22) umfasst, wobei die Positionsänderung der Gießabdichtung durch einen Knopf (7) gesteuert wird, der auf eine bistabile Steuervorrichtung (12) wirkt, wobei der Knopf (7) derart am festen Griff (3) eingerichtet ist, dass die Hand, die den Griff (3) ergreift, um den Behälter zu handhaben, auch auf den Knopf (7) drücken kann, wobei der Knopf (7) zwischen einer vorspringenden Ruheposition und einer eingedrückten Position, in der die bistabile Steuervorrichtung (12) die Position der Gießabdichtung (22) ändert, beweglich ist, **dadurch gekennzeichnet, dass** die bistabile Steuervorrichtung (12) im Deckel (5) eingerichtet ist und dass der Knopf (7) einen Stößel (9) umfasst, der in einen Durchlass (10) des Deckels (5) eindringt, wenn der Knopf (7) in der eingedrückten Position ist, und der vom Deckel (5) weg entnommen wird, wenn der Knopf (7) in der vorspringenden Ruheposition ist, wobei der Deckel unabhängig von der Position der Gießabdichtung vom Behältnis entnommen werden kann.

2. Behälter (1) nach Anspruch 1, wobei die bistabile Steuervorrichtung (12) vom Kugelschreibertyp ist.

3. Behälter (1) nach einem der Ansprüche 1 oder 2, wobei die bistabile Steuervorrichtung (12) ein Führungselement (11) umfasst, auf das der Stößel (9) wirkt, um die bistabile Steuervorrichtung (12) zu betätigen und die Position der Gießabdichtung (22) zu ändern.

4. Behälter (1) nach einem der Ansprüche 1 oder 3, wobei der Knopf (7) entlang einer Richtung verschoben werden kann, die in einer Ebene (P1) senkrecht zur vertikalen Achse (X1), vorzugsweise radial zur vertikalen Achse (X1), definiert ist.

5. Behälter (1) nach einem der Ansprüche 1 bis 4, wobei die Gießabdichtung (22) nahe der Tülle versetzt ist.

6. Behälter (1) nach einem der Ansprüche 1 bis 5, wobei der Deckel (5) eine Lüftungsröhre (30) zwischen dem Inneren und dem Äußeren des Behältnisses (2) umfasst, wobei die Lüftungsröhre getrennt und unterschiedlich von der Gießröhre (20) ist und eine zwischen einer offenen Position und einer geschlossenen Position bewegliche Lüftungsabdichtung (31) umfasst, wobei die Positionsänderung der Lüftungsabdichtung durch den Knopf (7) gesteuert wird, der auf die bistabile Steuervorrichtung (12) wirkt.

7. Behälter (1) nach Anspruch 6, wobei der Griff (3) diametral gegenüberliegend zur Tülle (4) eingerichtet ist, wobei die Lüftungsabdichtung (31) nahe des Griffs versetzt ist.

8. Behälter (1) nach einem der Ansprüche 6 oder 7, wobei die Lüftungsabdichtung (31) entlang einer Richtung (X4) verschoben werden kann, die in einer Ebene senkrecht zur vertikalen Achse (X1), vorzugsweise radial zur vertikalen Achse (X1), definiert ist.

9. Behälter (1) nach einem der Ansprüche 1 bis 8, wobei der Deckel (5) einen Anzeiger (17a, 17b) der Position der Gießabdichtung (22) umfasst.

10. Behälter (1) nach Anspruch 9, wobei der Deckel (5) ein Fenster (19) umfasst, hinter dem der Anzeiger (17a, 17b) eingerichtet ist.

11. Behälter (1) nach einem der Ansprüche 9 oder 10, wobei der Anzeiger (17a, 17b) auf einer oberen Wand (18) des Deckels (5) sichtbar ist.

12. Behälter (1) nach einem der Ansprüche 1 bis 11, wobei das Behältnis (2) eine obere Öffnung (2c) umfasst, die den Deckel (5) mittels eines Bajonettsystems (6) aufnimmt.

13. Behälter (1) nach einem der Ansprüche 1 bis 12, wobei der Knopf (7) mit Federrückstellung (8) in seiner Ruheposition montiert ist.

14. Behälter (1) nach einem der Ansprüche 1 bis 13, der eine Kaffeekanne ist, die dazu vorgesehen ist, mit einer Kaffeemaschine zusammenzuwirken, wobei der Deckel (5) eine Klappe (33) umfasst, die zwischen einer geschlossenen Position, wenn die Kaffeekanne von der Kaffeemaschine entnommen ist, und einer offenen Position des Übertragens von Kaffee, wenn die Kaffeekanne in der Kaffeemaschine platziert ist, beweglich ist.

15. Behälter (1) nach Anspruch 14, wobei die Klappe (33) in der Mitte des Deckels (5) eingerichtet ist, wobei die Klappe entlang einer Achse parallel zur vertikalen Achse (X1) verschoben werden kann.

16. Behälter (1) nach einem der Ansprüche 1 bis 14, der ein Wasserkocher ist, wobei der Deckel (5) eine Überdruckklappe umfasst, die zwischen einer geschlossenen Position, wenn der Druck im Behälter geringer ist als eine vorbestimmte Schwelle, und einer offenen Position, wenn der Druck im Behälter höher ist als die vorbestimmte Stelle, beweglich ist.

## Claims

1. Container (1) extending along a direction defined by a vertical axis (X1) and comprising a pot (2), a removable lid (5), a handle (3) fixed on the pot and a pouring spout (4), the lid comprising a pouring conduit (20) being the inside of the pot and the pouring spout, the pouring conduit comprising a pouring stopper (22) mobile between an open position and a closed position, the position change of the pouring spout being controlled by a button (7) acting on a bistable control device (12), the button (7) is arranged on the fixed handle (3), such that the hand which holds the handle (3) to manipulate the container can also press the button (7), the button (7) being mobile between a rest output position and a sunken position, wherein the bistable control device (12) makes the position of the pouring stopper (22) change, **characterised in that** the bistable control device (12) is arranged in the lid (5) and **in that** the button (7) comprises a pushbutton (9) which enters into a passage (10) of the lid (5) when the button (7) is in the sunken position and which is removed outside of the lid (5) when the button (7) is in the rest output position, the lid being able to be removed from the pot whatever the position of the pouring stopper.

2. Container (1) according to claim 1, wherein the bistable control device (12) is of the ballpoint type.

3. Container (1) according to any one of claims 1 or 2, wherein the bistable control device (12) comprises a guiding part (11) on which the pushbutton (9) acts to actuate said bistable control device (12) and to make the position of the pouring stopper (22) change.

4. Container (1) according to any one of claims 1 or 3, wherein the button (7) is mobile in translation along a direction defined in a plane (P1) perpendicular to the vertical axis (X1), preferably radially to the vertical axis (X1).

5. Container (1) according to any one of claims 1 to 4, wherein the pouring stopper (22) is offset in the proximity of the pouring spout.

6. Container (1) according to any one of claims 1 to 5, wherein the lid (5) comprises a vent conduit (30) between the inside and the outside of the pot (2), the vent conduit being separated and separate from the pouring conduit (20) and comprising a vent stopper (31) mobile between an open position and a closed position, the change of position of the vent stopper being controlled by the button (7) acting on the bistable control device (12).

7. Container (1) according to claim 6, wherein the handle (3) is arranged diametrically opposite to the pouring spout (4), the vent stopper (31) being offset in the proximity of the handle.

8. Container (1) according to any one of claims 6 or 7, wherein the vent stopper (31) is mobile in translation along a direction (X4) defined in a plane perpendicular to the vertical axis (X1), preferably radially to the vertical axis (X1).

9. Container (1) according to any one of claims 1 to 8, wherein the lid (5) comprises an indicator (17a, 17b) of the position of the pouring stopper (22).

10. Container (1) according to claim 9, wherein the lid (5) comprises a window (19) behind which is arranged the indicator (17a, 17b).

11. Container (1) according to any one of claims 9 or 10, wherein the indicator (17a, 17b) is visible on an upper wall (18) of the lid (5).

12. Container (1) according to any one of claims 1 to 11, wherein the pot (2) comprises an upper opening (2c) which receives the lid (5) by means of a bayonet system (6).

13. Container (1) according to any one of clams 1 to 12, wherein the button (7) is mounted in a return spring (8) in its rest output position.

14. Container (1) according to any one of claims 1 to 13, which is a coffee pot intended to engage with a coffee machine, the lid (5) comprising a valve (33) mobile between a closed position when the coffee pot is removed from the coffee machine and an open position for transferring coffee when the coffee pot is placed in the coffee machine.

15. Container (1) according to claim 14, wherein the valve (33) is arranged at the centre of the lid (5), the valve being mobile in translation along an axis parallel to the vertical axis (X1).

16. Container (1) according to any one of claims 1 to 14, which is a kettle, the lid (5) comprising a pressure relief valve mobile between a closed position when the pressure in the container is less than a predetermined threshold and an open position when the pressure in the container is greater than the predetermined threshold.
